# FASCICULE DE BREVET EUROPEEN

(11) **EP 0 915 402 B1**
(45) Date de publication et mention de la délivrance du brevet: **07.01.2004**
(21) Numéro de dépôt: 98870228.8
(22) Date de dépôt: 28.10.1998
(51) Int. Cl.: G05B 19/23, B25J 9/00

(54) **Procédé de contrôle pour préhenseur**
Manipulatorsteuerungsverfahren
Control process for manipulator

(30) Priorité: 05.11.1997 BE 9700889
(43) Date de publication de la demande: 12.05.1999
(73) Titulaire: STAAR SOCIETE ANONYME, B-1200 Bruxelles (BE)
(72) Inventeur: d'Alayer de Costemore d'Arc Stéphane, Marie André, 1474 Ways (BE)
(74) Mandataire: Overath, Philippe

(56) Documents cités:
- US-A- 4 458 188
- US-A- 4 540 923
- US-A- 4 611 155
- US-A- 5 065 081
- US-A- 5 103 404

## Description

La présente invention se rapporte aux moyens de contrôle pour préhenseurs et concerne plus particulièrement un procédé assurant la gestion d'un préhenseur pour manipuler un objet, notamment assurer son positionnement rapide à proximité de l'objet, saisir cet objet avec soin et le transporter à un endroit donné.

Tous les procédés actuellement utilisés mettent en oeuvre des détecteurs optiques, magnétiques de proximité et/ou des éléments de télémétrie pour contrôler le déplacement du préhenseur et notamment l'amener rapidement à proximité d'un objet puis le déplacer lentement pour saisir cet objet.

Le document US 4 611 155 divulgue, pour un dispositif classique d'asservissement mesurant la vitesse et le courant d'un moteur, l'utilisation de la mémoire interne d'un micro-contrôleur pour accumuler les impulsions de position du moteur, captées par un compteur spécifique indépendant et externe au micro-contrôleur, ceci pour éviter l'emploi d'un second compteur spécifique, externe et de grande capacité.

Le document US 4 540 923 décrit un circuit d'asservissement de gain pour compenser les forces de friction de Coulomb dans un moteur électrique qui met en oeuvre une mesure de courant, lorsque le moteur a dépassé une vitesse minimum de rotation préétablie.

Nonobstant leur prix, ces détecteurs et éléments de télémétrie nécessitent la mise en oeuvre d'une électronique spécifique pour les gérer, ce qui rend leur utilisation coûteuse. En outre, ces détecteurs nécessitent des dispositifs de sécurité, tels des interrupteurs ou barrières optiques, pour assurer, en cas de mauvais fonctionnement d'un détecteur, que le mouvement du préhenseur soit interrompu pour ne pas endommager le préhenseur, les dispositifs stockant les objets à saisir ou les objets eux-mêmes. Si un tel incident se produit, l'appareil est mis hors service et sa remise en service nécessite l'intervention préalable d'un technicien. En outre, ces détecteurs ne gèrent généralement qu'un seul type d'objets.

Le but de la présente invention est donc de remédier à ces inconvénients en proposant un procédé de contrôle simple, efficace et bon marché assurant un positionnement rapide et précis du préhenseur.

Un autre but de l'invention est de proposer un procédé garantissant une sécurité totale du préhenseur lors de son déplacement.

Un autre but de l'invention est de proposer un procédé utilisant les moyens d'entraînement mêmes du préhenseur pour éviter tout composant ou circuit électronique supplémentaire.

Un autre but de l'invention est de proposer un procédé assurant son propre calibrage, c'est-à-dire s'adaptant automatiquement aux diverses contraintes physiques qui peuvent varier dans le temps.

Un autre but de l'invention est de proposer un procédé permettant au préhenseur de saisir avec soin des objets de tailles ou types différents sans nécessiter de réglage ou d'adaptation spécifique.

Un autre but de l'invention est de proposer un procédé capable de se dépanner lui-même.

En vue de la réalisation de ces buts, le procédé objet de l'invention est essentiellement caractérisé par le contenu de la revendication principale.

D'autres caractéristiques et particularités ressortiront de la description, donnée ci-après, d'un mode de réalisation préféré de l'invention auquel diverses modifications peuvent être apportées sans pour autant sortir du cadre de l'invention et dans laquelle :
- la figure 1 est une vue générale de face d'un appareil assurant la préhension et le transfert d'objets différents : des disques optiques enregistrables du type CD, des boîtiers de rangement pour de tels disques, tous stockés dans des conduits,
- la figure 2 est une vue de dessus partielle à plus grande échelle et simplifiée du dispositif de préhension,
- la figure 2A est un détail, à plus grande échelle, d'un élément des figures 1 et 2,
- la figure 3 est un schéma partiel de l'électronique de contrôle,
- les figures 4A, 4B, 4C, 4D et 4E représentent des bloc-diagrammes du procédé de l'invention.

Afin de faciliter la description de l'invention et ne pas surcharger les figures, on n'a représenté sur celles-ci que les éléments essentiels à la compréhension de l'invention.

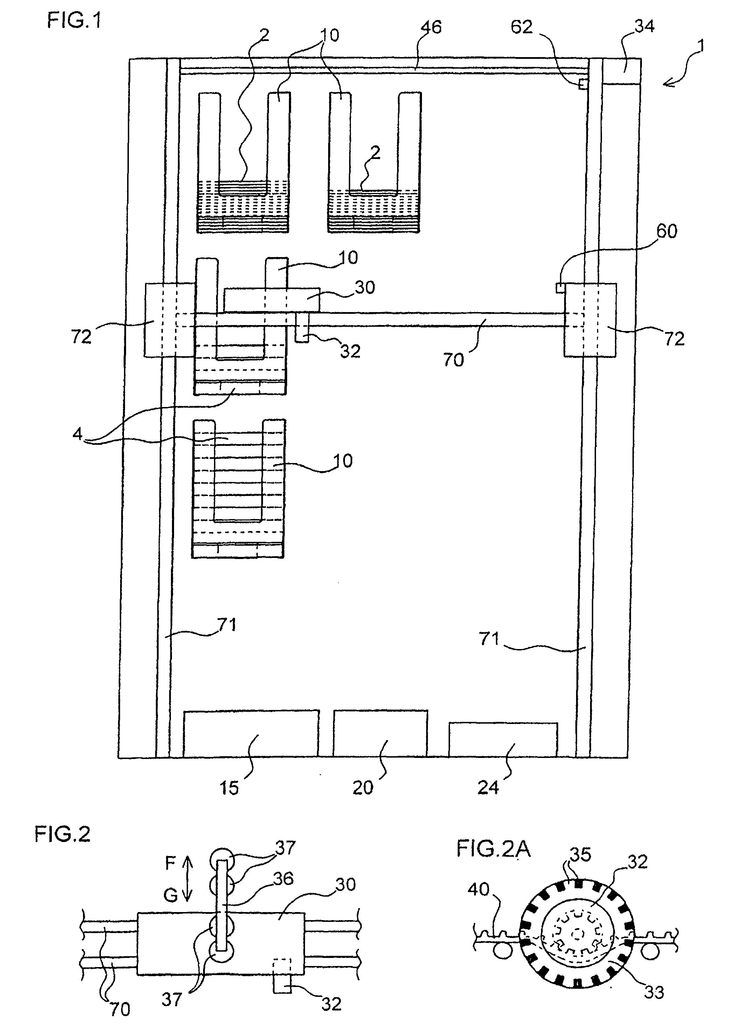

Comme le montre la figure 1, l'appareil 1 contrôlé par le procédé objet de l'invention assure la préhension de disques 2 et de boîtiers 4 stockés dans des conduits 10, le transfert des disques 2 vers une unité 15 d'enregistrement, le transfert des boîtiers 4 vers une unité d'impression 20, le transfert de disques 2 après enregistrement pour placement dans le boîtier 4 se trouvant sur l'unité d'impression 20, enfin l'acheminement de l'ensemble disque, boîtier à une sortie 24 pour remise à l'utilisateur.

Selon la figure 2, le préhenseur comporte un châssis 30 portant un bras 36 mobile (flèches F, G) muni à ses deux extrémités d'une paire de soupapes 37 reliées à un dispositif pneumatique (non représenté) assurant une dépression dans les soupapes 37 pour les transformer en ventouses et saisir l'objet contre lequel elles sont appliquées. Le montage montré schématiquement à la figure 2 permet de saisir des objets dans des conduits 10 placés aussi bien derrière que devant le châssis 30. Le châssis 30 est positionné dans l'espace à l'aide de moyens d'entraînement conventionnels, à savoir déplacé en abscisses sur des guides 70 horizontaux à l'aide d'un moteur 32, ces guides 70 aboutissant à chaque extrémité dans des coulisseaux 72 guidés verticalement par des tubes 71 et déplacés en ordonnées par un moteur 34. Chaque moteur 32, 34 est en prise avec une courroie crantée 40, celle associée au moteur 32 est attachée aux coulisseaux 72, celle associée au moteur 34 étant fixée d'une part au coulisseau 72 de droite, d'autre part à un contrepoids non représenté tandis qu'un axe horizontal 46 transmet ce mouvement vertical à une autre courroie crantée 40 située à proximité du tube 71 de gauche pour déplacer en synchronisme l'autre coulisseau 72.

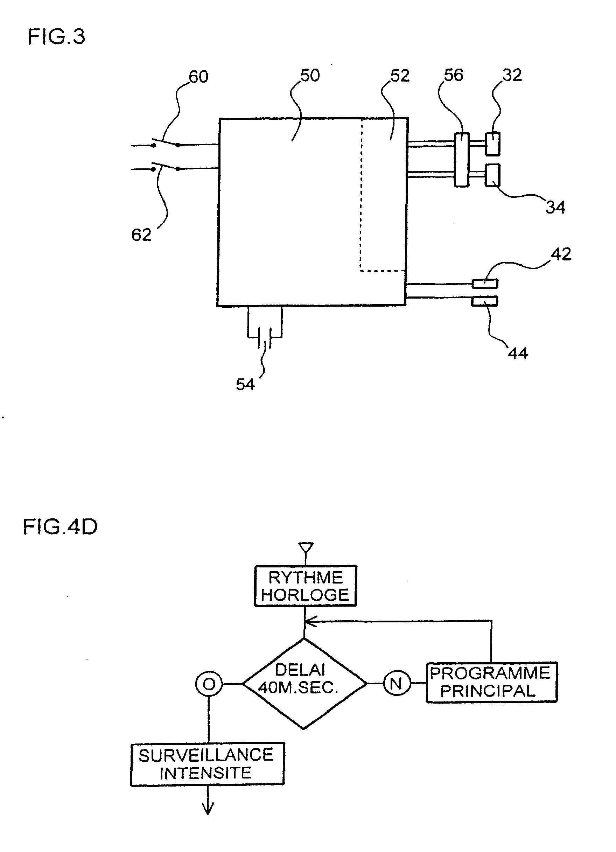

Comme montré schématiquement à la figure 3, un circuit de contrôle 50 gère les éléments d'entraînement et de commande de l'appareil 1 : les moteurs 32, 34, les compteurs 42, 44 qui y sont associés, les interrupteurs 60, 62 indiquant l'origine des coordonnées de positionnement des guides 70 et des tubes 71. Plus particulièrement, le circuit 50 est un microprocesseur du type Motorola 68HC11 rythmé par une horloge 54 et, conformément à l'invention, les bornes d'alimentation des deux moteurs 32, 34 sont reliées par l'intermédiaire d'un circuit de puissance 56 tel le L293E aux entrées/sorties de convertisseurs 52 analogiques/ numériques, internes au microprocesseur. La plaquette électronique comportant le microprocesseur 50 est, dans la réalisation préférée, montée sur le châssis 30.

Selon l'invention, les convertisseurs 52 assurent pour chaque moteur d'une part le contrôle de la tension appliquée à leurs bornes, par exemple en escalier (0 à 15 Volts) ayant quinze pas de 1 Volt, et d'autre part la mesure, à l'aide d'une résistance montée en série avec le moteur, de l'intensité du courant les traversant.

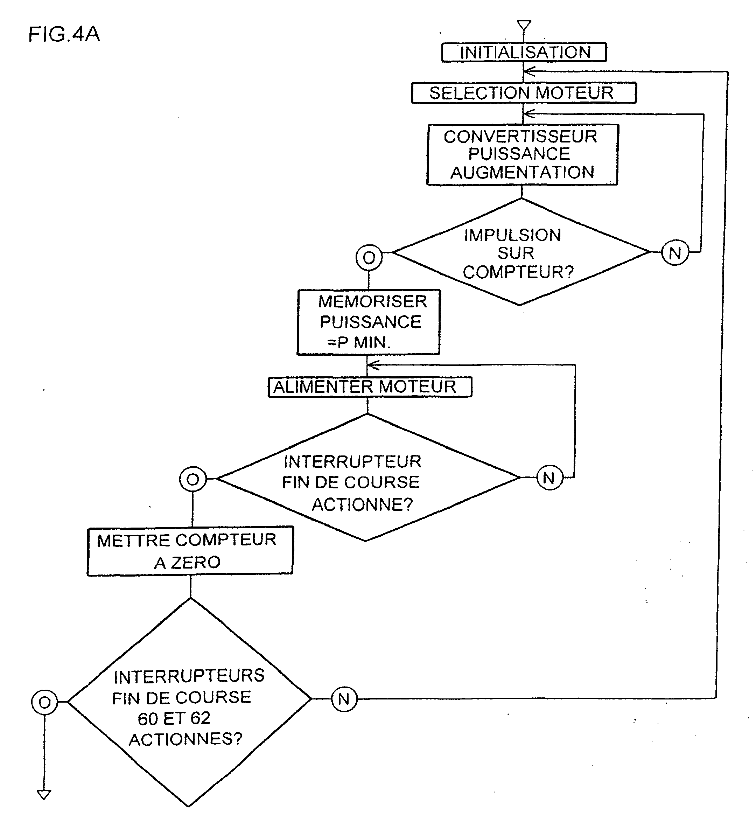

Lorsque l'appareil 1 est mis sous tension, le microprocesseur 50 assure son initialisation et notamment ramène le châssis 30 en haut et à droite de l'appareil. Comme l'indique la figure 4A, le microprocesseur 50 sélectionne un moteur, de préférence le moteur 32, et augmente pas-à-pas la tension qui lui est appliquée par l'intermédiaire du convertisseur 52 jusqu'à détecter la mise en mouvement du moteur 32 et donc du châssis 30 en surveillant le compteur 42 associé au moteur 32. Pour ce faire, chaque moteur 32, 34 porte sur son axe une roue codeuse 33 (figure 2A) dont le sens et la vitesse de rotation sont détectés par un ou deux senseur(s) optique(s) conventionnel(s) du type SFH-900 de le société Siemens dont le rayon lumineux est réfléchi ou non par des secteurs 35, alternativement réfléchissants et opaques, situés à sa périphérie. Dès que le compteur 42 note une impulsion signalant un déplacement horizontal du châssis 30, le pas correspondant à la valeur de la tension appliquée au moteur 32 par le convertisseur 52 est mémorisé comme puissance minimum de déplacement, dans ce cas la puissance minimum horizontale PMH pour servir de référence à tout déplacement horizontal fin. Cette mesure est l'une des caractéristiques du procédé de l'invention puisque la puissance minimale utilisée est celle réellement mesurée qui varie en fonction de la température, l'usure, la charge de l'appareil et est ainsi automatiquement et constamment adaptée aux conditions réelles d'utilisation de l'appareil. Le moteur 32 est alimenté avec cette puissance minimum jusqu'à ce que l'interrupteur horizontal 60 porté par le coulisseau 72 soit actionné ce qui indique que le châssis 30 est positionné à l'extrémité droite des guides 70 et simultanément le microprocesseur 50 remet à zéro la valeur du compteur 42 correspondant.

Ensuite, le microprocesseur 50 effectue la même démarche que décrite ci-dessus pour le moteur vertical 34 à l'aide du compteur 44 et mémorise la valeur de sa puissance minimale verticale PMV, puis à l'actionnement de l'interrupteur 62, situé en haut du tube 71 de droite, remet à zéro la valeur du compteur 44 associé au moteur 34.

Ultérieurement, la valeur instantanée des compteurs 42, 44 représente, lors du déplacement du châssis 30 et donc du préhenseur, sa position exacte en abscisse et ordonnée; ainsi, le microprocesseur 50 connaît en permanence la position exacte du préhenseur dans l'espace. Cette autre caractéristique de l'invention évite toute barrière optique de sécurité.

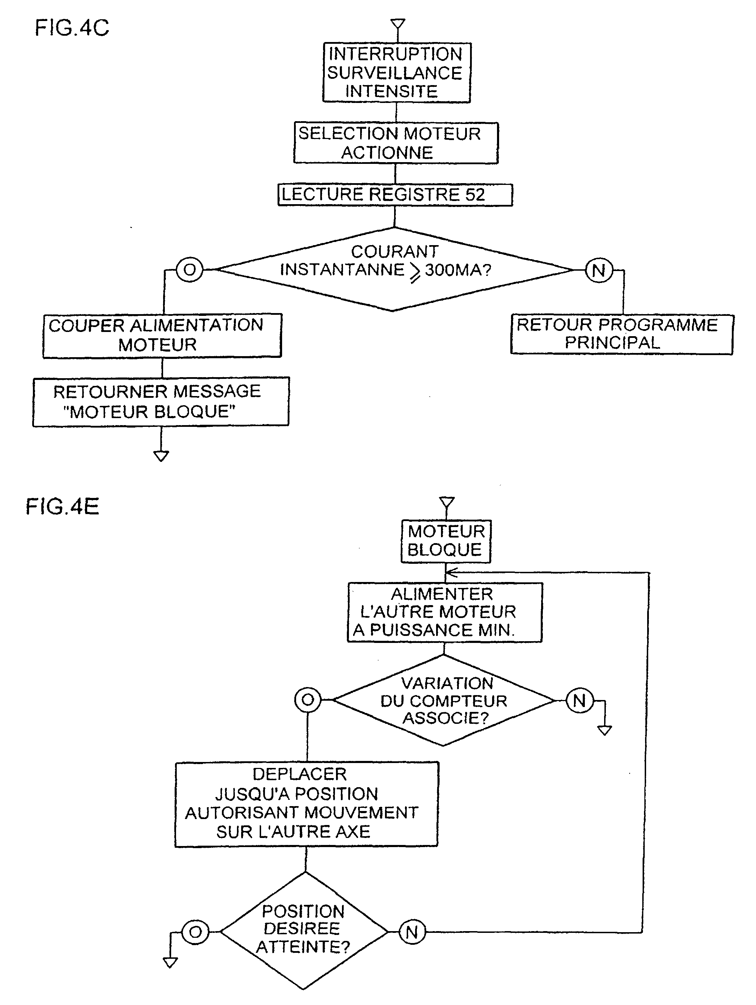

Tout au long d'un déplacement horizontal ou vertical, même lors de l'initialisation, l'interruption de programme (figure 4D), assure à un rythme multiple de celui de l'horloge 54, la surveillance de la consommation des moteurs 32, 34 comme indiqué au bloc-diagramme de la figure 4C en lisant la valeur du convertisseur 52 adéquat et si celle-ci dépasse la limite préétablie, par exemple 300mA, l'alimentation du moteur actionné est coupée. Dans ce cas le procédé selon l'invention délivre le message d'erreur "moteur bloqué" et met en oeuvre un processus de dépannage (figure 4E) où l'autre moteur, 34 par exemple, est alimenté à la puissance minimum PMV de telle sorte que, si au cours d'un déplacement horizontal, le châssis 30 est bloqué, le microprocesseur essaie de le déplacer verticalement. Si jamais le moteur 34 est arrêté suite à une mesure de surintensité indiquant un blocage lors d'un déplacement vertical, alors le moteur 32 est réalimenté à la puissance PMH. Ainsi, en alimentant à tour de rôle les moteurs 32, 34, le procédé permet de débloquer le préhenseur pour l'amener à la position désirée ou à celle d'initialisation. De cette façon, le procédé peut dépanner seul, donc sans technicien, l'appareil.

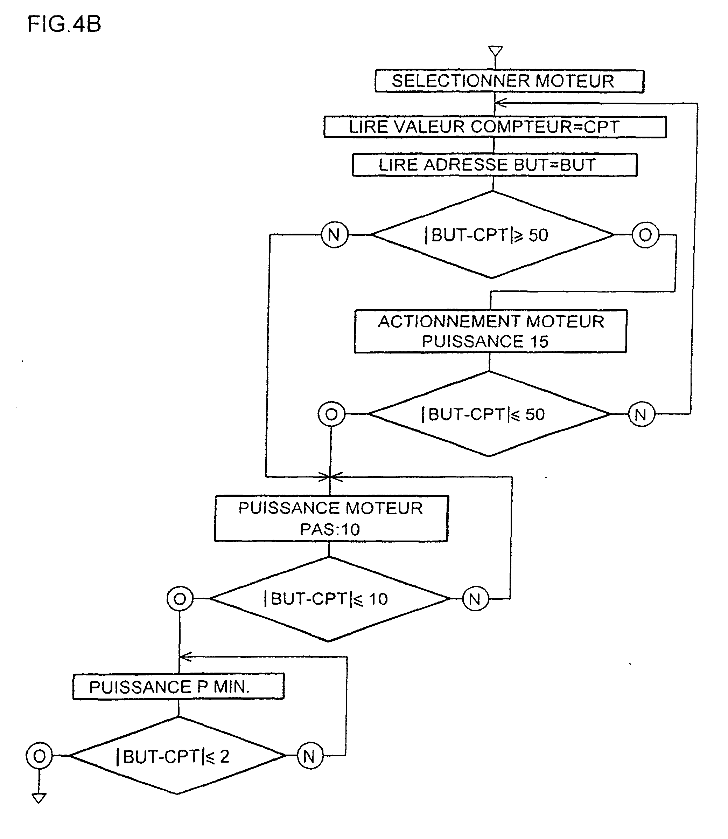

En fonctionnement normal, lorsque le bras 36 doit être déplacé pour que les soupapes 37 saisissent un disque 2 dans un conduit 10 dont la position du fond dans l'espace est connue par la valeur prise par les compteurs 42 et 44 lorsque le bras 36 est en face du fond dudit conduit, valeurs mémorisées dans le microprocesseur 50, les moteurs 32 et 34 sont successivement actionnés (figure 4B), à pleine tension (par exemple le dernier des pas disponible, soit 15 Volts) si le bras 36 est éloigné du conduit 10, pour obtenir un déplacement rapide. A l'approche d'un conduit, par exemple une différence de 50 impulsions entre la position instantanée du châssis et la position finale (but, figure 48) pour le compteur 42 ce qui représente une distance d'environ 7cm, la tension appliquée au moteur 32 est réduite (par exemple le pas 10, soit 9 Volts) pour assurer une approche précise du bras 36. Puis le moteur 34 assurant le mouvement vertical du bras 36 est actionné et sa tension commutée pour obtenir la puissance minimum (PMV) dès qu'il est à proximité du disque à saisir (par exemple 10 impulsions de différence entre la position actuelle et la position finale) pour assurer une approche fine du disque 2. Lorsque la différence en impulsions est inférieure à 2, le compteur 44 est surveillé et dès qu'aucune impulsion n'est générée par la roue codeuse 33 endéans un laps de temps prédéterminé, par exemple le rythme du cycle d'interruption et/ou que le convertisseur 52 détecte une intensité traversant le moteur supérieure à la limite préétablie (ici 300mA), l'alimentation du moteur 34 est immédiatement interrompue et ses pôles court-circuités pour assurer au bras 36 un arrêt instantané.

L'une quelconque des détections ci-dessus décrites: absence d'impulsions, surintensité, indique que le préhenseur ne peut plus être mû, donc que les soupapes 37 sont au contact du disque 2 situé à la partie supérieure de la pile contenue dans le conduit 10. Les pôles du moteur 34 sont maintenus court-circuités pour éviter tout déplacement du châssis 30 et le système pneumatique est actionné pour transformer les soupapes 37 en ventouses et assurer la préhension du disque 2. Simultanément, la valeur du compteur 44 est mémorisée pour une préhension ultérieure dans le même conduit et comme le microprocesseur 50 connaît la position du fond du conduit, il peut en déduire, en divisant la différence de niveau par l'épaisseur de l'objet considéré, le nombre d'objets stockés dans ledit conduit et ainsi tenir informé le gestionnaire de l'appareil.

Les valeurs des compteurs 42 et 44 représentant la position du châssis 30 dans l'espace étant connues, le microprocesseur actionne successivement les moteurs 34, 32 d'abord à puissance élevée, comme l'indique la figure 4B, pour sortir le disque 2 du conduit, l'amener dans la partie droite de la machine (figure 1) où il peut être acheminé sensiblement au niveau de l'unité d'enregistrement 15. Lorsque le compteur 44 atteint une valeur telle que la différence entre cette valeur et celle (but, figure 4B) de la position de l'unité 15 est inférieure à 50 impulsions, alors le microprocesseur applique aux bornes du moteur 34 la tension réduite (par exemple le pas 10) pour approcher en toute sécurité l'unité 15. Lorsque la différence de valeur entre la valeur instantanée du compteur 44 et celle de la position de l'unité 15 est inférieure ou égale à 10 impulsions, le microprocesseur applique aux bornes du moteur la puissance minimale PMV pour que le disque 2 atteigne en douceur l'unité 15. Lorsque la différence entre la valeur instantanée du compteur 44 et celle de la position de l'unité 15 est inférieure à 2 impulsions, le système pneumatique est désactivé et le disque ainsi déposé délicatement sur l'unité 15 pour son enregistrement.

Durant l'enregistrement du disque 2, le châssis 30 est mû pour permettre aux soupapes 37 du bras 36 de saisir un boîtier 4 dans un des conduits 10 appropriés et de la même façon que pour un disque 2, le déposer sur l'unité d'impression 20.

A l'achèvement de l'enregistrement du disque 2, le bras de préhension, de la même manière que décrite précédemment, est amené en face de l'unité 15 pour saisir le disque 2 puis le placer dans le boîtier 4 situé sur l'unité d'impression 20.

Ensuite, l'ensemble boîtier 4, disque 2 est déplacé par le préhenseur ou tout autre moyen approprié pour mise à disposition à la sortie 24.

Comme on le comprend aisément, ce procédé de contrôle du positionnement du préhenseur permet, par utilisation de différentes puissances et notamment de la puissance minimum mesurée, d'obtenir un transfert très rapide tout en assurant une grande protection du préhenseur et des objets à saisir, quels qu'ils soient et même lorsqu'ils sont de types très différents en ne mettant en oeuvre que les moyens assurant le déplacement même dudit préhenseur et en surveillant,pilotant les caractéristiques (tension - consommation) de chaque élément d'entraînement.
- 1: appareil
- 2: disque
- 4: boîtiers
- 10: conduits
- 15: unité d'enregistrement
- 20: unité d'impression
- 24: position de sortie
- 30: châssis
- 32, 34: moteurs
- 33: roue codeuse
- 35: secteurs réfléchissants
- 36: bras
- 37: soupapes
- 40: courroies crantées
- 42, 44: compteurs
- 46: axe
- 50: microprocesseur
- 52: convertisseur
- 54: horloge
- 56: circuit de puissance
- 60, 62: interrupteurs
- 70: guides
- 71: tubes
- 72: coulisseaux

## Revendications

1. Procédé de contrôle pour préhenseur comprenant des moyens de préhension (30, 36, 37) munis de moyens d'entraînement tels des moteurs électriques (32, 34) associés à des compteurs d'impulsions (42, 44) ainsi qu'un circuit de contrôle (50) muni de convertisseurs analogiques/numériques (52) reliés aux bornes d'alimentation des moyens d'entraînement (32, 34) pour mesurer la tension et le courant appliqués auxdits moteurs (32, 34), les moyens d'entraînement (32, 34) déplaçant les moyens de préhension (30, 36, 37) dans l'espace pour saisir et déplacer des objets (2, 4),
**caractérisé en ce qu'**on relie les bornes d'alimentation des moteurs électriques (32, 34) aux entrées/sorties des convertisseurs analogiques/numériques (52) du circuit de contrôle (50) et **en ce qu'**on mesure la tension et le courant appliqués auxdites bornes desdits moteurs (32, 34),
**en ce qu'**on augmente, respectivement diminue pas-à-pas la tension appliquée aux bornes des moteurs (32, 34) par l'intermédiaire des convertisseurs analogiques/numériques (52) et
**en ce qu'**on mémorise la valeur du pas appliqué aux bornes de chaque moteur (32, 34) par les convertisseurs (52) lorsque lesdits moteurs sont mis en mouvement, cette valeur étant mémorisée comme tension/puissance minimale d'actionnement desdits moteurs.

2. Procédé selon la revendication 1, **caractérisé en ce que** lorsqu'un des moteurs (32, 34) est déconnecté et/ou court-circuité suite à une surintensité, l'autre moteur (32, 34) est actionné à sa tension/puissance minimale de mouvement pour débloquer les moyens de préhension (30, 36, 37).

3. Procédé selon la revendication 2, **caractérisé en ce qu'**on connecte, respectivement déconnecte à tour de rôle les moteurs (32, 34) pour déplacer les moyens de préhension (30, 36, 37) en cas de blocage.

4. Procédé selon la revendication 1, **caractérisé en ce qu'**on applique aux moteurs (32, 34) assurant le déplacement des moyens de préhension, les tensions/puissances minimales mesurées pour assurer une approche fine de l'objet (2, 4) à saisir par les moyens de préhension (30, 36, 37).

5. Procédé selon la revendication 1 ou 2, **caractérisé en ce que** le compteur d'impulsions (42, 44) associé à chaque moteur (32, 34) est remis à zéro lorsque l'interrupteur (60, 62) situé à l'extrémité des guides (70), tubes (71) est actionné.

6. Procédé selon la revendication 1 ou 2, **caractérisé en ce que** la position du fond de chaque conduit (10) est mémorisée, ces valéurs étant comparées à celles des compteurs d'impulsions (42, 44) pour déterminer le niveau des objets (2, 4) et donc leur nombre dans ledit conduit (10).

7. Procédé selon la revendication 1 ou 2, **caractérisé en ce que** les bornes des moteurs (32, 34) sont court-circuitées lorsque le préhenseur (36, 37) saisit un objet (2, 4).

## Patentansprüche

1. Steuerungsverfahren für einen Greifer,
umfassend Greifmittel (30, 36, 37), die mit Antriebsmitteln wie Elektromotoren (32, 34) ausgestattet sind, die Impulszählern (42, 44) zugeordnet sind, sowie einen Steuerstromkreis (50), welcher mit Analog-Digital-Wandlern (52) ausgestattet ist, die mit den Anschlussklemmen der Antriebsmittel (32, 34) verbunden sind, um die Spannung und den Strom zu messen, welche an die Motoren (32, 34) angelegt werden, wobei die Antriebsmittel (32, 34) die Greifmittel (30, 36, 37) im Raum verschieben, um die Gegenstände (2, 4) zu ergreifen und zu verschieben,
**dadurch gekennzeichnet, dass** man die Anschlussklemmen der Elektromotoren (32, 34) mit den Eingängen/Ausgängen der Analog-Digital-Wandler (52) des Steuerstromkreises (50) verbindet und dass man die Spannung und den Strom misst, die an die Anschlussklemmen der Motoren (32, 34) angelegt werden,
dass man die an die Anschlussklemmen der Motoren (32, 34) angelegte Spannung mit Hilfe der Analog-Digital-Wandler (52) schrittweise erhöht bzw. verringert, und
dass man den Wert des Schrittes speichert, den man mit den Wandlern (52) an die Anschlussklemmen jedes Motors (32, 34) während des In-Bewegung-Setzens der Motoren anlegt, wobei dieser Wert als Minimalspannung/Minimalleistung zum Antreiben der Motoren gespeichert wird.

2. Verfahren nach Anspruch 1,
**dadurch gekennzeichnet, dass**, wenn einer der Motoren (32, 34) abgeschaltet und/oder infolge eines Überstroms kurzgeschlossen ist, der andere Motor (32, 34) mit seiner Minimalspannung/Minimalleistung zum Bewegen betrieben wird, um die Greifmittel (30, 36, 37) freizugeben.

3. Verfahren nach Anspruch 2,
**dadurch gekennzeichnet, dass** man die Motoren (32, 34) der Reihe nach an- bzw. abstellt, um die Greifmittel (30, 36, 37) für den Fall einer Blockierung zu verschieben.

4. Verfahren nach Anspruch 1,
**dadurch gekennzeichnet, dass** man die gemessenen Minimalspannungen/Minimalleistungen an die Motoren (32, 34), die die Verschiebung der Greifmittel gewährleisten, anlegt, um eine Feinannäherung an den mit den Greifmitteln (30, 36, 37) zu ergreifenden Gegenstand (2, 4) zu gewährleisten.

5. Verfahren nach Anspruch 1 oder 2,
**dadurch gekennzeichnet, dass** der jedem Motor (32, 34) zugeordnete Impulszähler (42, 44) auf Null zurückgestellt wird, wenn der am Ende der Führungen (70), Rohre (71) angeordnete Schalter (60, 62) betätigt wird.

6. Verfahren nach Anspruch 1 oder 2,
**dadurch gekennzeichnet, dass** die Bodenposition jedes Gehäuse (10) gespeichert ist, wobei diese Werte mit denen der Impulszähler (42, 44) verglichen werden, um die Höhe der Gegenstände (2, 4) und somit ihre Anzahl in dem Gehäuse (10) zu bestimmen.

7. Verfahren nach Anspruch 1 oder 2,
**dadurch gekennzeichnet, dass** die Motoranschlussklemmen (32, 34) kurzgeschlossen werden, wenn der Greifer (36, 37) einen Gegenstand (2, 4) ergreift.

## Claims

1. Control process for gripper comprising gripping means (30, 36, 37) having driving means such as electric motors (32, 34) associated with pulse counters (42, 44) as well as a control circuit (50) provided with analog/digital converters (52) connected to the terminals of the driving means (32, 34) to measure the voltage and the current applied to said motors (32, 34), the driving means (32, 34) shifting the gripping means (30, 36, 37) in the space to grip and move objects (2, 4),
**characterized in that** the terminals of the electric motors (32, 34) are connected to the inputs/outputs of the analog/digital converters (52) of the control circuit (50) and **in that** the voltage and current applied to said terminals of said electric motors (32, 34) are measured,
**in that**, the voltage applied to the terminals of the motors (32, 34) is increased, respectively decreased step by step via the analog/digital converters (52) and
**in that** the value of the step applied to the terminals of each motor (32, 34) via the converters (52), when said motors start to move, is memorized as being the minimal voltage/power powering said motors.

2. Process according to claim 1 **characterized in that** when one of the motors (32, 34) is disconnected and/or short-circuited as a result of an over-current, the other motor (32, 34) is powered at its minimal powering voltage/power to unlock the gripping means (30, 36, 37).

3. Process according to claim 2, **characterized in that** the motors (32, 34) are connected respectively disconnected in turns to shift the gripping means (30, 36, 37) if blocked.

4. Process according to claim 1, **characterized in that** the measured minimal powering voltage/power is applied to the motors (32, 34) moving the gripping means to enable an accurate approach of the object (2, 4) to be gripped by the gripping means (30, 36, 37).

5. Process according to claim 1 or 2, **characterized in that** the pulse counters (42, 44) associated to each motor (32, 34) is reset upon the actuation of the switch (60, 62) located at the extremity of the guides (70), tubes (71).

6. Process according to claim 1 or 2, **characterized in that** the position of the bottom of each duct (10) is memorized, these values being compared to those of the pulse counters (42, 44) to determine the level of the objects (2, 4) and thus their quantity within said duct (10).

7. Process according to claim 1 or 2, **characterized in that** the terminals of the motors (32, 34) are short-circuited upon the gripper (36, 37) gripping an object (2, 4).
